# FASCICULE DE BREVET EUROPEEN

(11) **EP 1 338 052 B1**
(45) Date de publication et mention de la délivrance du brevet: **27.07.2011**
(21) Numéro de dépôt: 01983648.5
(22) Date de dépôt: 29.10.2001
(51) Int. Cl.: H01M 8/04

(54) **PROCEDE ET INSTALLATION DE PURGE DE L'EAU INCLUSE DANS LE CIRCUIT HYDROGENE D'UNE PILE A COMBUSTIBLE**
VERFAHREN UND VORRICHTUNG ZUR SPÜLUNG VON DEM WASSER INNERHALB EINES BRENNSTOFFZELLE-WASSERSTOFFKREISLAUFES
METHOD AND INSTALLATION FOR PURGING WATER FROM A FUEL CELL HYDROGEN CIRCUIT

(30) Priorité: 14.11.2000 FR 0014654
(43) Date de publication de la demande: 27.08.2003
(73) Titulaire: L'AIR LIQUIDE, Société Anonyme pour l'Etude et l'Exploitation des Procédés Georges Claude, 75007 Paris (FR)
(72) Inventeur: CHARLAT, Pierre, F-38250 Lans En Vercors (FR)
(74) Mandataire: Le Moenner, Gabriel
(86) Numéro de dépôt international: PCT/FR2001/003360
(87) Numéro de publication internationale: WO 2002/041426

(56) Documents cités:
- EP-A- 0 692 835
- US-A- 5 366 821
- US-A- 5 478 662
- PATENT ABSTRACTS OF JAPAN vol. 015, no. 090 (E-1040), 5 mars 1991 (1991-03-05) -& JP 02 304872 A (FUJI ELECTRIC CO LTD), 18 décembre 1990 (1990-12-18)
- PATENT ABSTRACTS OF JAPAN vol. 2000, no. 15, 6 avril 2001 (2001-04-06) -& JP 2000 348745 A (MITSUBISHI ELECTRIC CORP), 15 décembre 2000 (2000-12-15) -& DATABASE WPI Derwent Publications Ltd., London, GB; AN 2001-130974 XP002191063 & JP 2000 348745 A (MITSUBISHI ELECTRIC CORP), 15 décembre 2000 (2000-12-15)

## Description

La présente invention est relative au domaine technique des piles à combustible et elle concerne, plus particulièrement, les piles du type faisant intervenir, en tant que comburant, de l'air enrichi ou non en oxygène, voire de l'oxygène pur et, en tant que combustible, de l'hydrogène.

Les structures des piles à combustible du type ci-dessus sont connues ainsi que leur principe de fonctionnement qui passe par la consommation de l'hydrogène dans le compartiment anode.

Un tel fonctionnement a pour caractéristiques de produire dans le circuit anode de l'eau, de l'azote diffusant à travers la membrane séparant le compartiment anode du compartiment cathode, ainsi éventuellement que des impuretés initialement présentes dans l'hydrogène et qui tendent à se concentrer.

Afin de maintenir des conditions fonctionnelles optimales, il est prévu d'éliminer l'eau, l'azote et les impuretés en procédant généralement à des purges régulières du circuit hydrogène.

La fréquence des purges nécessaires dépend des caractéristiques de la pile ainsi que des régimes de fonctionnement et peut aller de quelques secondes à quelques minutes.

Une des caractéristiques fonctionnelles de telles piles est aussi de laisser subsister, à la sortie du circuit anode, une quantité résiduelle d'hydrogène non consommée qui est donc perdue si l'élimination de l'eau, de l'azote et des impuretés est assurée par purges périodiques.

Afin d'éviter une perte d'hydrogène, la technique antérieure a préconisé d'assurer une recirculation du mélange issu de la sortie du compartiment anode pour le réinjecter à l'entrée du même compartiment de la pile. Une telle réinjection assure un brassage permanent des gaz et améliore le fonctionnement en présence d'impuretés et d'azote mais laisse cependant le problème de la récupération de l'eau qui demande à être récupérée de manière à favoriser le bilan hydrique du fonctionnement notamment pour assurer l'humidification et/ou de refroidissement des cellules de la pile.

Le choix de procéder à une recirculation du mélange impose de recourir à des moyens techniques particuliers et, notamment, à la présence d'un circulateur qui constitue une machine tournante relativement complexe et soumise à des conditions de fonctionnement délicates, notamment en présence d'eau liquide.

Une telle machine tournante constitue un équipement coûteux, exigeant un entretien sérieux et, par conséquent, grevant de façon sensible le prix d'achat ainsi que le coût fonctionnel d'une pile à combustible.

Par ailleurs, il a été constaté que la recirculation du mélange ne permet pas toujours de bénéficier de conditions efficaces pour éliminer l'eau, notamment lorsque la vitesse des mélanges principalement gazeux n'est pas suffisante. On pourrait tenter de remédier, au moins pour partie, à cet inconvénient en soumettant le mélange à une recirculation plus rapide mais alors les problèmes inhérents à la présence du circulateur croissent en proportion.

Quelles que soient les conditions fonctionnelles telles qu'elles viennent d'être énoncées, il est en outre toujours nécessaire de disposer de la présence d'un séparateur de phases particulièrement efficace de manière à pouvoir assurer la séparation de l'eau. Or, un tel séparateur constitue un accessoire relativement onéreux, occupant un volume non négligeable et qui pose des problèmes d'inertage dans le cas de mise en service ou d'arrêt fonctionnel d'une pile à combustible.

La présente invention concerne un procédé et une installation visant à éliminer les inconvénients ci-dessus en faisant appel à des moyens techniques de faible encombrement, de faible coût, de faible entretien et qui sont susceptibles de faire intervenir, par recirculation alternée, une purge de l'eau incluse dans le circuit hydrogène d'une pile à combustible.

Pour atteindre l'objectif ci-dessus, le procédé de purge, selon l'invention, est caractérisé en ce qu'il consiste à:
- réaliser chaque cellule de la pile de manière à lui faire comporter une paire d'un premier et un second compartiments anodes,
- raccorder la sortie du premier compartiment anode à rentrée du circuit anode du second compartiment anode,
- raccorder la sortie du second compartiment anode à l'entrée du premier compartiment anode,
- raccorder les entrées des circuits anodes des cellules avec un circuit d'alimentation en hydrogène par deux branchements en parallèle contrôlés par deux organes d'ouverture-fermeture,
- piloter périodiquement l'inversion d'états desdits organes.

L'invention a encore pour objet une installation pour la mise en oeuvre du procédé ci-dessus, une telle installation étant caractérisée en ce qu'elle comprend
- des cellules qui sont composées chacune d'une paire d'un premier et un second compartiments anodes,
- un raccordement entre la sortie du premier compartiments anode et l'entrée du second compartiment anode,
- un raccordement entre la sortie du second compartiment anode et l'entrée du premier compartiment anode,
- un circuit d'alimentation en hydrogène des circuits anodes des cellules par l'intermédiaire de deux branchements en parallèle et contrôlés par deux organes d'ouverture-fermeture.
- des moyens pour piloter périodiquement l'inversion d'états desdits organes.

Diverses autres caractéristiques ressortent de la description faite ci-dessous en référence aux dessins annexés qui montrent, à titre d'exemples non limitatifs, des formes de réalisation et de mise en oeuvre de l'objet de l'invention

La **fig. 1** est une vue schématique illustrant l'invention dans un exemple de réalisation simplifié d'une pile à combustible.

La **fig. 2** est une vue schématique se rapportant à une proposition de pile à combustible composée de *n* cellules,

La **fig. 3** est une vue schématique analogue à la **fig. 1** mais illustrant une phase du procédé.

Les **fig. 4** et **5** sont des vues schématiques, analogues aux **fig. 1** et **3****,** mais correspondant à une variante de réalisation de l'invention.

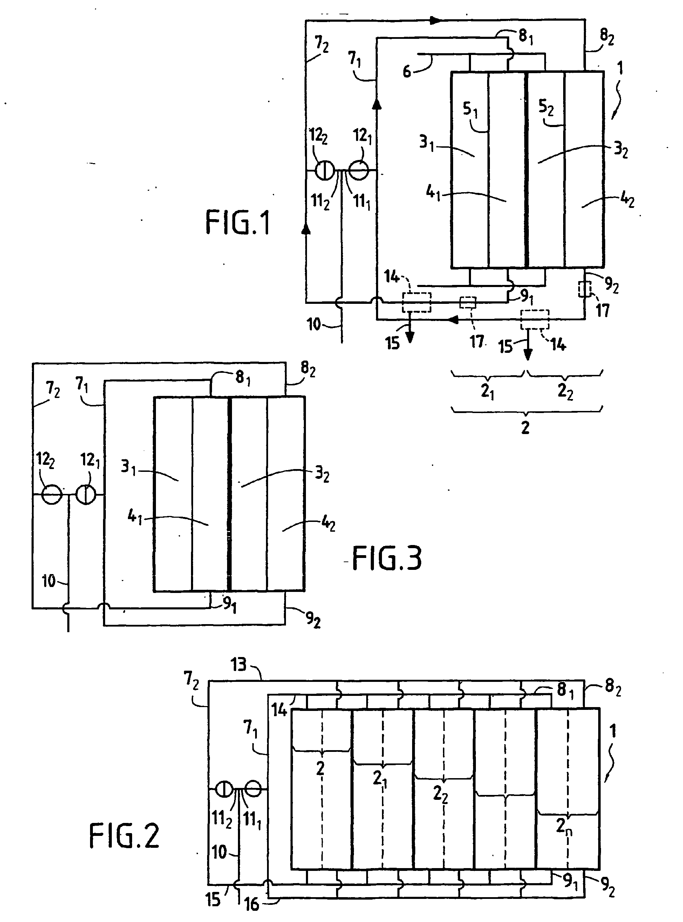

Dans l'exemple de réalisation simplifiée illustré par la **fig. 1****,** une pile à combustible désignée par la référence **1** comprend une cellule **2** qui est constituée par deux demies piles **2₁** et **2₂** répondant aux mêmes caractéristiques constitutives. Chaque demie pile comprend un compartiment cathode **3₁, 3₂** et un compartiments anode **4₁, 4₂** contenant chacun une électrode cathode et une électrode anode qui sont séparées par une membrane de perméation et de réaction **5₁, 5₂.**

D'une manière conventionnelle, les compartiments **3₁** et **3₂** sont raccordés à un circuit 6 d'alimentation en comburant tel que de l'oxygène pur ou de l'air enrichi ou non en oxygène. De manière également classique, les compartiments anodes **4₁** et **4₂** sont raccordés à un circuit d'alimentation en combustible c'est-à-dire de l'hydrogène, lequel selon l'invention, fait intervenir les dispositions structurelles suivantes.

Le circuit d'alimentation en hydrogène de la demie pile **2₁** est désigné par la référence **7₁** et comprend une entrée **8₁** et une sortie **9₁** alors que le circuit correspondant pour la demie pile **2₂** comprend une entrée **8₂** et une sortie **9₂.**

Selon l'invention il est prévu de raccorder la sortie **9₂** de la cellule **2₂** à l'entrée **8₁** du compartiment **4₁** de la première demie pile. De même, il est prévu de raccorder la sortie **9₁** du compartiment **4₁** à rentrée **8₂** du compartiment **4₂** de la seconde demie pile **2₂.**

Les circuits **7₁** et **7₂** sont par ailleurs raccordés à un circuit **10** d'alimentation en hydrogène par l'intermédiaire de deux branchements **11₁** et **11₂** établis en parallèle et qui sont contrôlés par deux organes d'ouverture-fermeture **12₁** et **12₂.**

Avantageusement, mais non nécessairement, les organes **12₁** et **12₂** sont du type tout ou rien en étant inversement conjugués et sont pilotés en inversion d'états de manière synchronisée par des moyens techniques appropriés, tels notamment qu'une temporisation.

Les moyens qui sont décrits en relation avec une cellule **2** sont transposables, mutatis mutandis, à une pile à combustible **1** qui serait composée **(****fig. 2****)** de ***n*** cellules de pile **2,** telle que **2₁,2n,** répondant aux caractéristiques décrites en relation avec la **fig.1****.**

Dans un tel cas, les entrées et sorties des différentes piles **2** sont réunies par des collecteurs **13, 14, 15** et **16,** alors que les parties de circuit **7₁** et **7₂** sont raccordées à l'alimentation commune **10** par l'intermédiaire des deux branchement parallèles **11₁** et **11₂.** Il doit être considéré que des moyens équivalents peuvent être mis en oeuvre pour assumer la même fonction et que, dans certains cas, il est possible d'envisager la mise en oeuvre d'un circuit d'alimentation des deux branchements et des deux organes **12** pour chaque pile **2.**

Dans l'état de mise en service, tel qu'illustré par la **fig. 1****,** l'organe **12₁** est ouvert alors que l'organe **12₂** est fermé. En conséquence, l'hydrogène sous pression relative apporté par le circuit d'alimentation **10** emprunte le branchement **11₁,** traverse l'organe ouvert **12₁** et pénètre dans le circuit **7₁** pour assurer l'alimentation en hydrogène du compartiment anode **4₁.**

La réaction fonctionnelle s'établit de manière conventionnelle dans la demie pile **2₁** dont le compartiment cathode est alimenté en comburant.

Pendant cette phase de fonctionnement, le mélange essentiellement gazeux qui est issu du compartiment anode **4₁** emprunte la sortie **9₁** pour suivre le circuit **7₂** et être recyclé dans le compartiment anode **4₂** de la demie pile **2₂** dont le compartiment cathode **3₂** est aussi alimenté en comburant.

L'hydrogène résiduel qui est ainsi recyclé est consommé dans la demie pile **2₂** dont le compartiment **4₂** est soumis, malgré des conditions de fonctionnement non optimales, à un brassage ou une circulation du mélange gazeux par le recyclage de celui issu de la sortie du compartiment anode **4₁.**

Après une phase de fonctionnement caractérisée par une temporisation d'une durée déterminée éventuellement réglable, l'état des organes **12₁** et **12₂** est inversé comme montré par la **fig. 3** de telle manière que les conditions d'alimentation en hydrogène sont alors assurées au bénéfice du compartiment anode **4₂** dont la sortie **9₂** assure le recyclage vers l'entrée du compartiment **4₁** de la demie cellule **2₁** du mélange gazeux issu de la réaction interne au fonctionnement de la demie cellule **2₂.**

Les mêmes avantages sont ainsi procurés et permettent d'assurer dans les meilleures conditions la séparation de l'eau incluse en prévoyant d'interposer, par exemple à la sortie **9₁** ou **9₂,** voire au-delà de ces deux sorties, au moins et de préférence deux séparateurs **14** possédant une sortie **15** d'élimination de l'eau.

Il doit être considéré que les organes **12₁** et **12₂** peuvent être constitués par des robinets ou des organes analogues et qu'ils peuvent aussi être remplacés par des clapets ou autres organes sensibles à la pression, éventuellement associés à des moyens techniques anti-retour.

Dans un tel cas, les variations de pression qui interviennent en fonction de l'alimentation cyclique d'une demie pile puis de la seconde, permettent, en fonction du seuil de réglage imposé aux organes **12₁** et **12₂** une inversion automatique de leur état, soit par commande séparée, soit par commande conjuguée.

Il peut également être mis en oeuvre, pour assurer la même fonction, des capteurs de pression partielle d'hydrogène **17** asservissant le changement d'état des organes **12₁** et **12₂**

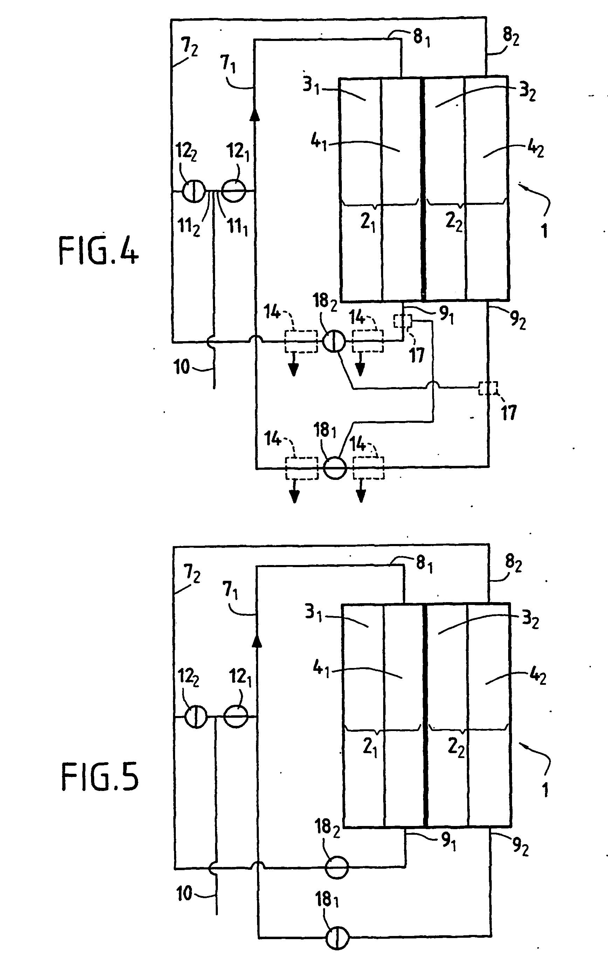

Les **fig. 4** et **5** montrent une variante de réalisation dans laquelle les sorties **9₁** et **9₂** sont contrôlées par des organes **18₁** et **18₂,** tels que des vannes, qui sont pilotées en fonctionnement inverse en relation directe avec les organes **12₁** et **12₂.** en étant soumis à des conditions analogues de fonctionnememt. Les vannes **18₁** et **18₂** peuvent aussi être du type à fonctionnement séquentiel automatique ou, au contraire, placées sous la dépendance de temporisation ou de détection de seuils de pression, notamment par les capteurs **17.** Dans une telle configuration, lorsque l'alimentation du compartiment anode **4₁** est assurée par l'ouverture de l'organe **12₁,** la vanne **18** est alors de préférence fermée alors que la vanne **18₁** peut être indifféremment ouverte ou fermée.

Lors de l'inversion d'alimentation, l'organe **12₁** est fermé alors que l'organe **12₂** est ouvert et, simultanément, la vanne **18₁** est fermée comme cela ressort de la **fig. 5****.**

La **fig.4** montre qu'au moins un séparateur **17** peut être placé entre la sortie **9₂** et la vanne **18₂** ou entre la sortie **9₁** et la vanne **18₁.**

Il doit être considéré qu'un séparateur **17** peut aussi être placé en aval de chacune des vannes **18₁, 18₂.**

L'invention n'est pas limitée aux exemples décrits et représentés car diverses modifications peuvent y être apportées sans sortir de son cadre.

## Revendications

1. Procédé de purge de l'eau incluse dans le circuit hydrogène, par circulation alternée d'hydrogène au sein d'une pile à combustible **caractérisé en ce qu'**il consiste à:
- réaliser chaque cellule de la pile de manière à lui faire comporter une paire d'un premier et un second compartiments anodes,
- raccorder la sortie du premier compartiment anode à l'entre du circuit anode du second compartiment anode,
- raccorder la sortie du second compartiment anode à l'entrée du premier compartiment anode,
- raccorder les entrées des circuits anodes des cellules avec un circuit d'alimentation en hydrogène par deux branchements en parallèle contrôlés par deux organes d'ouverture-fermeture,
- piloter périodiquement l'inversion d'états desdites organes.

2. Procédé selon la revendication 1, **caractérisé en ce que** l'on contrôle la section de passage des sorties des circuits anodes des cellules par des vannes d'ouverture-fermeture et **en ce que** l'on pilote périodiquement inversion d'états desdites vannes

3. Procédé selon l'une des revendications 1 ou 2, **caractérisé en ce que** l'on pilote périodiquement l'inversion d'états des organes et/ou des vannes par temporisation.

4. Procédé selon la revendication 2 **caractérisé en ce que** l'on pilote périodiquement l'inversion d'états des organes et/ou des vannes en les rendant sensibles à des seuils de pression.

5. Procédé selon la revendication-4, **caractérisé en ce que** l'on pilote les organes et/ou des vannes en les plaçant sous la dépendance de capteurs de la pression partielle d'hydrogène régnant dans les circuits anodes des cellules.

6. Procédé selon l'une des revendications 1 à 5, **caractérisé en ce que** l'on récupère l'eau par l'intermédiaire d'au moins un séparateur disposé sur la sortie du circuit anode de l'une au moins des dernières cellules.

7. Installation de purge de Peau incluse dans le circuit hydrogène d'une pile à combustible (1) composée de *n* cellules, **caractérisée en ce qu'**elle comprend :
- des cellules qui sont composées chacune d'une paire d'un premier et un second compartiments anodes **(4₁** et **4₂),**
- un raccordement entre la sortie **(9₁)** du premier compartiment anode et l'entrée **(8₂)** du second compartiment anode,
- un raccordement entre la sortie **(9₂)** du second compartiment anode et l'entrée **(8₁)** du premier compartiment anode,
- un circuit **(10)** d'alimentation en hydrogène des circuits anodes des cellules par l'intermédiaire de deux branchements en parallèle **(11₁** et **11₂)** contrôlés par deux organes d'ouverture-fermeture **(12₁** et **12₂),**
- des moyens pour piloter périodiquement l'inversion d'états desdits organes.

8. Installation selon la revendication 7, **caractérisée en ce qu'**elle comprend des vannes **(18₁** et **18₂)** d'ouverture-fermeture, contrôlant la section de passage des sorties **(9₁** et **9₂)** anodes, ainsi que des moyens pour piloter périodiquement l'inversion d'états desdites vannes.

9. Installation selon la revendication 7 ou 8, **caractérisée en ce que** les moyens pour piloter périodiquement l'inversion d'états des organes et/ou des vannes sont à base de temporisation.

10. Installation selon l'une des revendications 7 à 9, **caractérisée en ce que** les moyens pour piloter périodiquement l'inversion d'états des organes et/ou des vannes font intervenir des moyens sensibles à des seuils de pression.

11. Installation selon l'une des revendications 7 à 10, **caractérisée en ce que** les moyens pour piloter périodiquement l'inversion d'états des organes et/ou des vannes comprennent des capteurs **(17)** de la pression partielle d'hydrogène dans les circuits anodes des cellules asservissant lesdits organes et/ou vannes.

12. Installation selon l'une des revendications 7 à 11 **caractérisée en ce qu'**elle comprend au moins un séparateur d'eau **(14)** placé sur l'une au moins des sorties des circuits anodes.

## Claims

1. Method of purging the water contained in the hydrogen circuit by alternate circulation of hydrogen within a fuel cell assembly, **characterized in that** it consists in:
- constructing each cell of the fuel cell assembly so that it comprises a pair of first and second anode compartments;
- connecting the outlet of the first anode compartment to the inlet of the anode circuit of the second anode compartment,
- connecting the outlet of the second anode compartment to the inlet of the first anode compartment;
- connecting the inlets of the anode circuits of the cells with a hydrogen feed circuit via two parallel branches controlled by two opening/closing members; and
- periodically reversing the states of said members.

2. Method according to Claim 1, **characterized in that** the flow area of the outlets of the anode circuits of the cells is controlled by opening/closing valves and **in that** the states of said valves are periodically reversed.

3. Method according to either of Claims 1 and 2, **characterized in that** the states of the members and/or valves are periodically reversed by a timing device.

4. The method as claimed in Claim 5, **characterized in that** the states of the members and/or valves are periodically reversed by making them sensitive to pressure thresholds.

5. Method according to Claim 2, **characterized in that** the members and/or valves are controlled by making them dependent on sensors measuring the hydrogen partial pressure within the anode circuits of the cells.

6. Method according to one of Claims 1 to 5, **characterized in that** the water is recovered by means of at least one separator placed at the outlet of the anode circuit of at least one of the last cells.

7. Installation for purging water contained in the hydrogen circuit of a fuel cell assembly (**1**) made up of **n** cells, **characterized in that** it comprises:
- cells that are each composed of a pair of first and second anode compartments **(4₁** and **4₂);**
- a connection between the outlet **(9₁)** of the first anode compartment and the inlet **(8₂)** of the second anode compartment;
- a connection between the outlet **(9₂)** of the second anode compartment and the inlet of **(8₁)** of the first anode compartment;
- a hydrogen feed circuit **(10)** for supplying the anode circuits of the cells via two parallel branches **(11₁** and **11₂)** controlled by two opening/closing members **(12₁** and **12₂) ;** and
- means of periodically reversing the states of said members.

8. Installation according to Claim 7, **characterized in that** it comprises opening/closing valves **(18₁** and **18₂),** which control the flow area of the anode outlets **(9₁** and **9₂),** and means for periodically reversing the states of said valves.

9. Installation according to Claim 7 or 8, **characterized in that** the means for periodically reversing the states of the members and/or valves are timing-based.

10. Installation according to one of Claims 7 to 9, **characterized in that** the means for periodically reversing the states of the members and/or valves involve means sensitive to pressure thresholds.

11. Installation according to one of Claims 7 to 10, **characterized in that** the means for periodically reversing the states of the members and/or valves comprise sensors **(17)** for measuring hydrogen partial pressure in the anode circuits of the cells, controlling said members and/or valves.

12. Installation according to one of Claims 7 to 11, **characterized in that** it comprises at least one water separator **(14)** placed on at least one of the outlets of the anode circuits.

## Patentansprüche

1. Verfahren zum Entleeren von Wasser, das im Wasserstoffkreis enthalten ist, durch abwechselnde Zirkulation von Wasserstoff in einem Brennstoffzellenstapel, **dadurch gekennzeichnet, dass** es darin besteht:
- jede Zelle des Stapels in der Weise zu verwirklichen, dass sie ein Paar aus einem ersten und einem zweiten Anodenfach enthält,
- den Ausgang des ersten Anodenfachs mit dem Eingang des Anodenkreises des zweiten Anodenfachs zu verbinden,
- den Ausgang des zweiten Anodenfachs mit dem Eingang des ersten Anodenfachs zu verbinden,
- die Eingänge der Anodenkreise der Zellen mit einem Wasserstoffversorgungskreis durch zwei parallele Zweige, die durch zwei Öffnungs-/Schließorgane gesteuert werden, zu verbinden,
- die Umkehrung der Zustände dieser Organe periodisch zu steuern.

2. Verfahren nach Anspruch 1, **dadurch gekennzeichnet, dass** der Durchlassquerschnitt der Ausgänge der Anodenkreise der Zellen durch Öffnungs-/Schließschieber gesteuert wird und dass die Umkehrung der Zustände dieser Schieber periodisch gesteuert wird.

3. Verfahren nach einem der Ansprüche 1 oder 2, **dadurch gekennzeichnet, dass** die Umkehrung der Zustände der Organe und/oder Schieber durch Verzögerung periodisch gesteuert wird.

4. Verfahren nach Anspruch 5, **dadurch gekennzeichnet, dass** die Umkehrung der Zustände der Organe und/oder Schieber **dadurch** periodisch gesteuert wird, dass sie für Druckschwellenwerte empfindlich gemacht werden.

5. Verfahren nach Anspruch 2, **dadurch gekennzeichnet, dass** die Organe und/oder Schieber **dadurch** gesteuert werden, dass sie in Abhängigkeit von Sensoren für den Wasserstoffpartialdruck, der in den Anodenkreisen der Zellen herrscht, gebracht werden.

6. Verfahren nach einem der Ansprüche 1 bis 5, **dadurch gekennzeichnet, dass** das Wasser über wenigstens einen Separator, der am Ausgang des Anodenkreises wenigstens einer der letzten Zellen angeordnet ist, wiedergewonnen wird.

7. Anlage zum Entleeren von Wasser, das im Wasserstoffkreis eines aus n Zellen aufgebauten Brennstoffzellenstapels (1) enthalten ist, **dadurch gekennzeichnet, dass** sie enthält:
- Zellen, die jeweils aus einem Paar aus einem ersten und einem zweiten Anodenfach (4₁ und 4₂) aufgebaut sind,
- eine Verbindung zwischen dem Ausgang (9₁) des ersten Anodenfachs und dem Eingang (8₂) des zweiten Anodenfachs,
- eine Verbindung zwischen dem Ausgang (9₂) des zweiten Anodenfachs und dem Eingang (8₁) des ersten Anodenfachs,
- einen Kreis (10) für die Versorgung mit Wasserstoff der Anodenkreise der Zellen über zwei parallel Zweige (11₁ und 11₂), die durch zwei Öffnungs-/Schließorgane (12₁ und 12₂) gesteuert werden,
- Mittel, um die Umkehrung der Zustände dieser Organe periodisch zu steuern.

8. Anlage nach Anspruch 7, **dadurch gekennzeichnet, dass** sie Öffnungs-/Schließschieber (18₁ und 18₂), die den Durchlassquerschnitt der Anodenausgänge (9₁ und 9₂) steuern, und Mittel, um die Umkehrung der Zustände dieser Schieber periodisch zu steuern, enthält.

9. Anlage nach Anspruch 7 oder 8, **dadurch gekennzeichnet, dass** die Mittel zum periodischen Steuern der Umkehrung der Zustände der Organe und/oder der Schieber auf der Grundlage von Verzögerung arbeiten.

10. Anlage nach einem der Ansprüche 7 bis 9, **dadurch gekennzeichnet, dass** die Mittel zum periodischen Steuern der Umkehrung der Zustände der Organe und/oder der Schieber Mittel einwirken lassen, die für Druckschwellenwerte empfindlich sind.

11. Anlage nach einem der Ansprüche 7 bis 10, **dadurch gekennzeichnet, dass** die Mittel zum periodischen Steuern der Umkehrung der Zustände der Organe und/oder der Schieber Sensoren (17) für den Wasserstoffpartialdruck in den Anodenkreisen der Zellen, die die Organe und/oder Schieber regeln, enthalten.

12. Anlage nach einem der Ansprüche 7 bis 11, **dadurch gekennzeichnet, dass** sie wenigstens einen Wasserseparator (14) enthält, der an wenigstens einem der Ausgänge der Anodenkreise angeordnet ist.
